# FASCICULE DE BREVET EUROPEEN

(11) **EP 2 228 254 B1**
(45) Date de publication et mention de la délivrance du brevet: **02.11.2011**
(21) Numéro de dépôt: 10152825.5
(22) Date de dépôt: 05.02.2010
(51) Int. Cl.: B60N 2/50, B60N 2/52

(54) **Dispositif de réglage et maintien de la hauteur d'un siège**
Vorrichtung zur Verstellung und Aufrechterhaltung der Höhe eines Sitzes
Device for adjusting and maintaining the height of a seat

(30) Priorité: 04.03.2009 FR 0900973
(43) Date de publication de la demande: 15.09.2010
(73) Titulaire: Parker Hannifin France S.A.S., 74100 Annemasse (FR)
(72) Inventeur: Viste, Jean-François, 27190, La Bonneville sur Iton (FR)
(74) Mandataire: Jouanneau, Lionel

(56) Documents cités:
- EP-A2- 1 844 979
- WO-A1-2008/067977
- US-A1- 2009 026 816
- US-A1- 2009 050 220

## Description

La présente invention se rapporte à un dispositif pour le réglage de la hauteur d'un siège d'un véhicule automobile et le maintien en position dudit siège au cours d'un voyage.

Le siège du conducteur d'un véhicule automobile est généralement réglable afin que celui-ci puisse adapter la hauteur du siège à sa propre taille en vue d'un confort de conduite optimum.

Pour ce faire, un siège de véhicule comprend généralement un cadre de siège qui peut être ajusté relativement à un cadre de base, généralement ancré dans un plancher du véhicule.

L'ajustement de la hauteur du cadre de siège par rapport au cadre de base est effectué par un actionneur, monté entre lesdits cadre de base et cadre de siège.

L'actionneur pourra être notamment un vérin souple mais sans s'y limiter.

Cet actionneur est alimenté par une source de pression et est associé à une valve de commande permettant de régler l'extension ou la rétractation de l'actionneur et par voie de conséquence la hauteur du cadre de siège par rapport au cadre de base.

Par ailleurs les systèmes de réglages en hauteur peuvent être également munis d'une fonction de mémorisation et de maintien de la hauteur, notamment en fonction du poids du conducteur.

Un tel système est connu et décrit notamment dans les documents US 2009/0026816 et EP 1 844 979, ce dernier correspondant au préambule de la revendication 1.

Un tel système de réglage comprend donc :
- une fonction de montée, dite « UP », permettant de lever le siège et qui se traduit par la mise en pression du vérin,
- une fonction de descente, dite « DOWN », permettant d'abaisser le siège et qui se traduit par la mise à l'échappement du vérin,
- une fonction de régulation « AUTOLEVEL » qui permet la compensation des variations de hauteur du siège autour d'une position prédéfinie et mémorisée. Cette fonction se traduit par l'ajustement de la pression dans le vérin souple.

Généralement, les fonctions UP et DOWN ont pour effet de réinitialiser la mémorisation de la fonction AUTOLEVEL, la hauteur de référence étant modifiée.

Par ailleurs, un système tel que décrit dans les documents US 2009/0026816 et EP 1 844 979 nécessitent un nombre important de composants, et notamment au moins deux ensembles de valves.

Ainsi, il existe un besoin pour un système plus simple et efficace présentant des fonctionnalités additionnelles.

Pour ce faire, la présente invention se rapporte à un dispositif de réglage de la hauteur d'un siège, notamment d'un siège de véhicule automobile, comprenant au moins un actionneur destiné à être disposé entre une base fixe et une base dudit siège, mobile relativement à la base fixe, ledit actionneur étant relié à au moins une source de puissance par l'intermédiaire d'au moins une valve de commande comportant au moins un organe de commande d'une mise en pression de l'actionneur et au moins un organe de commande d'une mise à l'échappement de l'actionneur, le dispositif comprenant une came associée, d'une part, à au moins un moyen d'entraînement en fonction d'une variation de hauteur du siège, et d'autre part, aux organes de commande de la valve, ladite came étant configurée pour présenter au moins une position neutre dans laquelle elle n'actionne aucun organe de commande, et au moins deux positions actives autour de ladite position neutre, correspondant respectivement à une mise en pression de l'actionneur lorsque la came a pivoté autour de la position neutre dans un sens correspondant à une diminution de la hauteur du siège et à une mise à l'échappement de l'actionneur lorsque la came a pivoté autour de la position neutre dans un sens correspondant à un relèvement de la hauteur du siège, **caractérisé en ce que** les moyens d'entraînement sont en outre montés de manière débrayable par rapport à la came.

Ainsi, en équipant le dispositif d'un moyen d'entraînement débrayable, il est possible de désaccoupler la came à la demande, ce qui permet de réaliser un dispositif plus simple et comprenant des fonctionnalités améliorées. Le dispositif peut également être réduit à un seul ensemble de valve.

L'actionneur sera de manière préférentielle un actionneur pneumatique, et plus particulièrement un vérin ou un vérin souple relié à une source de pression, mais tout actionneur et source de puissance adaptée est envisageable.

On précisera que la valve pourra posséder une partie de commande à pilotage lui-même pneumatique, électrique ou autre, notamment à l'aide de microswitches et d'électrovannes par exemple. La came pourra par exemple agir sur un des deux microswitches suivant son sens de déplacement, lesquels transmettraient un signal électrique vers une électrovanne qui agirait sur l'actionneur.

Les caratéristiques complémentaires énumérées ci-après font l'objet des revendications dépendantes.

Avantageusement, la came est équipée d'un moyen de rappel en position neutre.

Préférentiellement, le débrayage du moyen d'entraînement par rapport à la came s'effectue par un signal pneumatique.

Préférentiellement encore, le moyen de débrayage est monté à l'encontre d'un organe de rappel élastique en position embrayée.

De manière avantageusement complémentaire, la valve de commande comporte également au moins un organe de commande de la mise en pression et au moins un organe de commande de la mise à l'échappement de l'actionneur aptes chacun à être reliés à un levier de commande de la hauteur du siège en vue de sa commande manuelle, l'actionnement desdits organes de commande provoquant le débrayage du moyen d'entraînement par rapport à la came.

Avantageusement, le moyen d'entraînement de la came est une roue dentée. Bien évidemment, d'autres moyens d'entraînement sont envisageables, notamment un jeu de poulies, un système de courroies éventuellement crantée, par exemple.

Avantageusement encore, le moyen d'embrayage est une étoile d'embrayage montée mobile en translation à l'intérieur de la roue dentée entre une position dans laquelle elle engage la roue dentée et transmet son mouvement à la came et une position dans laquelle elle ne transmet plus le mouvement de la roue dentée à la came.

De manière préférentielle, le dispositif comprend un moyen de mise à l'échappement de l'actionneur et n'entraînant pas le débrayage du moyen d'entraînement de la came.

Ceci permet la mise en oeuvre d'une fonctionnalité de désactivation du siège. De cette manière, le conducteur a la possibilité de désactiver son siège par mise à l'échappement de l'actionneur, ce qui le laisse retomber dans sa position la plus basse. Cela peut permettre un accès plus aisé à la cabine par exemple. L'absence de débrayage lors de l'actionnement de cette fonctionnalité permet une mémorisation de la position du siège avant désactivation. De ce fait, lorsque la commande est relâchée, le siège retrouve sa position mémorisée.

Cette fonction a également pour but de limiter la consommation intempestive d'air sous pression, notamment lors des arrêts prolongés du véhicule, en particulier la nuit. Elle empêche ainsi que les réservoirs d'air comprimé ne se vident pendant cette période d'inactivité en isolant le vérin du circuit général d'alimentation en air et isolant ainsi les éventuelles fuites sur le circuit pneumatique du siège. Au redémarrage du véhicule, le conducteur retrouve immédiatement son réglage simplement en relâchant cette fonction.

La présente invention se rapporte également à un siège, notamment pour véhicule automobile, **caractérisé en ce qu'**il comprend au moins un dispositif de réglage et maintien de la hauteur selon l'invention.

La présente invention se rapporte encore à un véhicule automobile, **caractérisé en ce qu'**il comprend au moins un siège selon l'invention.

La présente invention sera mieux comprise à la lecture de la description détaillée qui suit en regard du dessin annexé dans lequel :
- La figure 1 est une vue de profil d'un dispositif selon l'invention.
- La figure 2 est une vue de profil éclatée du dispositif de la figure 1.
- La figure 3 est une vue du dispositif de la figure 1, la came étant en position neutre.
- La figure 4 est une vue du dispositif de la figure 1, la came étant en position de mise à l'échappement du vérin suite à relèvement de la hauteur du siège.
- Les figures 5 et 6 sont des vue en coupe longitudinale de la came équipant le dispositif de la figure 1 et du moyen d'entraînement associé, respectivement en position embrayée et débrayée.
- Les figures 7 et 8 sont des vues du dispositif de la figure 1 avec mise à l'air complète du vérin et regonflage.

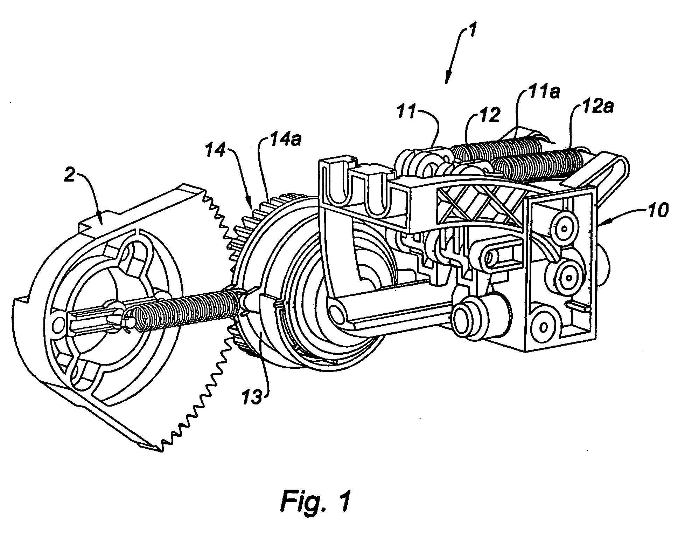

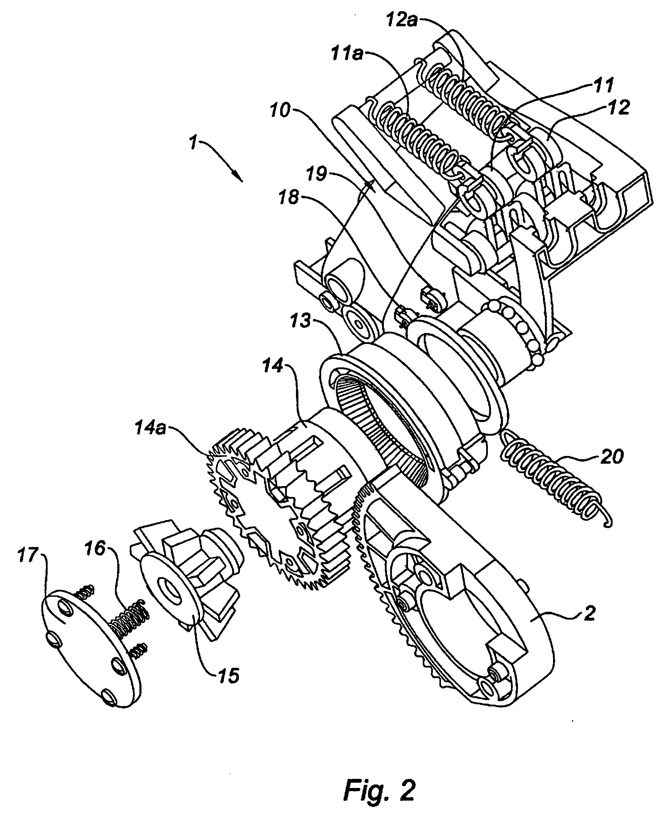

Un dispositif 1 selon l'invention tel que représenté sur les figures 1 à 8, est destiné à coopérer avec une roue dentée fixe 2 montée sur le siège et se suivant ses déplacements verticaux.

Le dispositif 1 selon l'invention comprend un actionneur (non représenté) destiné à être disposé entre une base fixe et une base dudit siège, mobile relativement à la base fixe, et relié à une source de pression par l'intermédiaire d'au moins une valve de commande 10.

La valve de commande 10, comporte un premier levier 11 de commande des fonctions de montée et de descente. Le levier 11 de commande est commun à ces deux fonctions et est conçu pour commander, par exemple, la montée du siège par mise en pression de l'actionneur lorsque l'utilisateur tire le levier 11 et la descente du siège par mise à l'échappement de l'actionneur lorsque l'utilisateur pousse le levier 11. Un organe de rappel élastique 11 a force son retour dans une position neutre.

La valve de commande 10 comprend également un levier 12 de commande d'une fonction de désactivation du siège permettant la mise à l'échappement totale de l'actionneur. Le levier 12 est également monté à l'encontre d'un moyen de rappel élastique 12a.

La conception de la valve de commande 10 ainsi que des moyens de commande de mise à l'air et de mise en pression relève de la compétence habituelle de l'homme du métier du domaine des distributeurs pneumatiques, valves de commandes pneumatiques, etc.

On notera que la commande de ces fonctions peut se faire de plusieurs manières, notamment par pilotage électrique (microswitchs), par pilotage pneumatique (tiroirs mobiles pilotés pneumatiquement), etc. Le mode de pilotage est indifférent à l'objet de l'invention.

La valve de commande est associée à un système de maintien de la hauteur.

Ce système comprend une came 13 associée à un moyen d'entraînement 14 se présentant sous la forme d'un pignon apte à être engrené à l'intérieur de la came 13 et comprenant une roue dentée 14a elle-même engrenée avec la roue dentée fixe 2 fixée dans le siège.

Conformément à l'invention, le pignon 14 peut être engrené avec la came 13 de manière débrayable. Pour ce faire, le pignon 14 est équipée d'une étoile d'embrayage 15 montée à l'intérieur de celui-ci et mobile axialement entre une position dans laquelle l'étoile d'embrayage 15 engrène le pignon 14 avec la came 13 et une position de débrayage dans laquelle l'étoile d'embrayage 15 est repoussée et désengagée de la came 13.

L'étoile d'embrayage 15 est montée à l'encontre d'un moyen de retour élastique 16, la forçant en position embrayée. Le moyen de retour élastique 16 est monté sur un disque d'appui 17 fixé dans une surface supérieure du pignon 14.

Ainsi, le mouvement de variation de hauteur du siège est transmis par l'intermédiaire de la roue dentée fixe 2 au pignon 14 qui est animé d'un mouvement de rotation correspondant, ledit pignon transmettant lui-même ce mouvement de rotation à la came 13.

La came 12 est conçue et disposée de manière à pouvoir coopérer avec deux moyens de commande 18, 19 additionnels de la valve de commande 10.

Le premier moyen de commande additionnel 18 vise à commander une mise en pression de l'actionneur tandis que le deuxième moyen de commande 19 vise à commander une mise à l'échappement de l'actionneur.

Comme précédemment, ces moyens de commande 18, 19 pourront être, entre autres, des microswitches ou des moyens de commande à signal pneumatique.

On notera également que la came est équipée d'un moyen de rappel élastique 20 vers une position neutre, ce moyen de rappel élastique 20 étant en l'espèce un ressort présentant une première extrémité rattachée à la came 13 et une deuxième extrémité rattachée à la roue dentée fixe 2.

L'actionnement des moyens de commande 18, 19 par la came 13 s'effectue à l'aide de surépaisseurs disposé sur la périphérie de la came 13 en regard de chacun des moyens de commande 18, 19 et autour de la position neutre.

Ainsi, lorsque la came 13 est en position neutre aucune surépaisseur ne vient actionner l'un des moyens de commande 18, 19.

Lorsque la came 13 en entrainée en rotation dans un sens correspondant à une baisse de la hauteur du siège, ladite came 13 s'écarte de sa position neutre et une première surépaisseur vient actionner le moyen de commande 18 correspondant permettant une remise en pression du siège.

Réciproquement, lorsque la came 13 en entrainée en rotation dans un sens correspondant à une augmentation de la hauteur du siège, ladite came 13 s'écarte de sa position neutre et une deuxième surépaisseur vient actionner le moyen de commande 19 correspondant permettant une remise en pression du siège.

Les moyens de commande 18 et 19 sont actionnés par leur surépaisseur respective jusqu'à ce que la came 13 revienne dans sa position neutre, sous l'effet du mouvement de rehaussement ou de descente correspondant du siège et transmis par la roue dentée fixe 2 et le pignon 14.

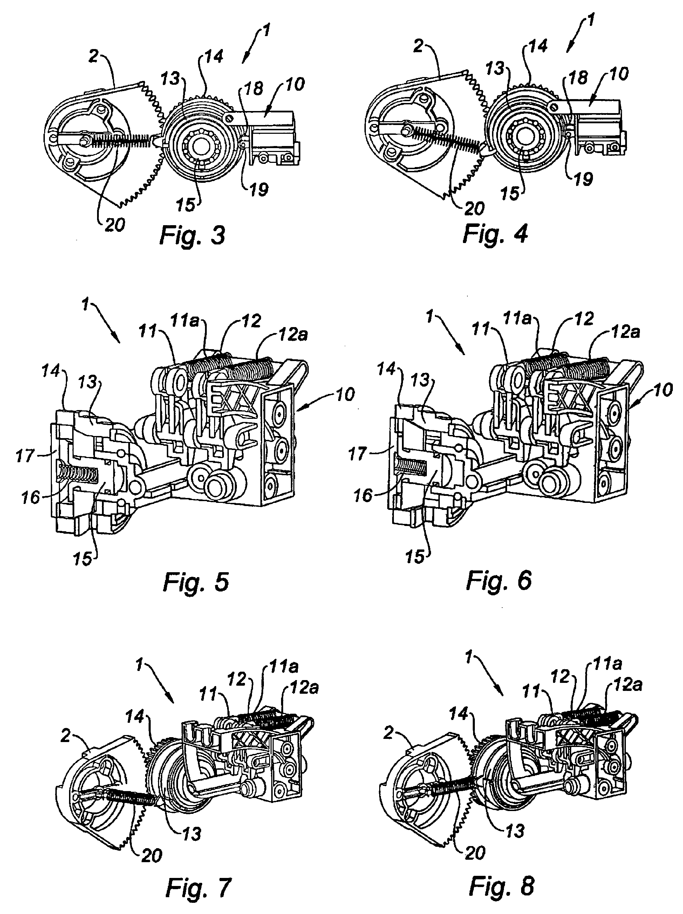

Les figures 3 et 4 lustrant le fonctionnement du dispositif 1.

Lorsque le levier de commande 11 pour les fonctions de montée et de descente est en position de repos, la came 13 est solidaire du pignon 14 (l'étoile d'embrayage 15 est engagée). Les variations de hauteur du siège sont transformées en une oscillation angulaire de la came 13. Celle-ci agit alors sur les moyens de commande 18, 19 afin de rétablir et ajuster la pression dans l'actionneur.

L'embrayage et le débrayage de l'étoile d'embrayage 15 est représenté sur les figures 5 et 6.

Lorsque le levier de commande 11 de montée et de descente est actionné, un signal pneumatique est envoyé vers l'étoile d'embrayage 15 qui est repoussée en position de débrayage, désaccouplait ainsi la came 13 du pignon 14.

Si la came 13 ne se trouve pas en position neutre lors de l'actionnement du levier de commande 11, celle-ci y est ramenée et maintenue par le ressort de rappel 20. Lors du relâchement du levier 11, et à l'embrayage de l'étoile d'embrayage 15 réaccouplant la came 13 et le pignon 14, une nouvelle position de référence est définie et mémorisée mécaniquement.

Les figures 7 et 8 illustrent la fonction de désactivation.

Lors de l'actionnement du levier 12 de désactivation, l'actionneur est mis à l'échappement et totalement dégonflé. La came 13 reste cependant solidaire du pignon 14 et conserve ainsi en mémoire la position de référence précédente. Au relâchement du levier 12 de désactivation, la came 13 actionne le moyen de commande 18 commandant le regonflage automatique de l'actionneur jusqu'à ce que le siège ait retrouvé la hauteur enregistré, c'est-à-dire, jusqu'au retour de la came 13 en position neutre.

## Revendications

1. Dispositif (1) de réglage de la hauteur d'un siège, notamment d'un siège de véhicule automobile, comprenant au moins un actionneur destiné à être disposé entre une base fixe et une base dudit siège, mobile relativement à la base fixe, ledit actionneur étant relié à au moins une source de puissance par l'intermédiaire d'au moins une valve de commande (10) comportant au moins un organe de commande (18) d'une mise en pression de l'actionneur et au moins un organe de commande (19) d'une mise à l'échappement de l'actionneur, le dispositif comprenant une came (13) associée, d'une part, à au moins un moyen d'entraînement (14) en fonction d'une variation de hauteur du siège, et d'autre part, aux organes de commande de la valve, ladite came étant configurée pour présenter au moins une position neutre dans laquelle elle n'actionne aucun organe de commande, et au moins deux positions actives autour de ladite position neutre, correspondant respectivement à une mise en pression de l'actionneur lorsque la came a pivoté autour de la position neutre dans un sens correspondant à une diminution de la hauteur du siège et à une mise à l'échappement de l'actionneur lorsque la came a pivoté autour de la position neutre dans un sens correspondant à un relèvement de la hauteur du siège, **caractérisé en ce que** les moyens d'entraînement sont en outre montés de manière débrayable par rapport à la came.

2. Dispositif (1) selon la revendication 1, **caractérisé en ce que** la came (13) est équipée d'un moyen de rappel (20) en position neutre.

3. Dispositif (1) selon l'une quelconque des revendications 1 ou 2, **caractérisé en ce que** le débrayage du moyen d'entraînement (14) par rapport à la came (13) s'effectue par un signal pneumatique.

4. Dispositif (1) selon l'une quelconque des revendications 1 à 3, **caractérisé en ce que** le moyen de débrayage (15) est monté à l'encontre d'un organe de rappel élastique (16) en position embrayée.

5. Dispositif (1) selon l'une quelconque des revendications 1 à 4, **caractérisé en ce que** la valve de commande (10) comporte également au moins un organe de commande de la mise en pression et au moins un organe de commande de la mise à l'échappement de l'actionneur aptes chacun à être reliés à un levier (11) de commande de la hauteur du siège en vue de sa commande manuelle, l'actionnement desdits organes de commande provoquant le débrayage du moyen d'entraînement (14) par rapport à la came (13).

6. Dispositif (1) selon l'une quelconque des revendications 1 à 5, **caractérisé en ce que** le moyen d'entraînement de la came (13) est une roue dentée (14).

7. Dispositif (1) selon la revendication 6, **caractérisé en ce que** le moyen d'embrayage est une étoile d'embrayage (15) montée mobile en translation à l'intérieur de la roue dentée (14) entre une position dans laquelle elle engage la roue dentée et transmet son mouvement à la came (13) et une position dans laquelle elle ne transmet plus le mouvement de la roue dentée à la came.

8. Dispositif (1) selon l'une quelconque des revendications 1 à 7, **caractérisé en ce qu'**il comprend un moyen de mise à l'échappement (12) de l'actionneur et n'entraînant pas le débrayage du moyen d'entraînement (14) de la came (13).

9. Siège, notamment pour véhicule automobile, **caractérisé en ce qu'**il comprend au moins un dispositif (1) de réglage et maintien de la hauteur selon l'une quelconque des revendications 1 à 8.

10. Véhicule automobile, **caractérisé en ce qu'**il comprend au moins un siège selon la revendication 9.

## Claims

1. Device (1) for adjusting the height of a seat, particularly a seat of a motor vehicle, comprising at least one actuator intended to be positioned between a fixed base and a base of the said seat, able to move relative to the fixed base, the said actuator being connected to at least one source of power via at least one control valve (10) comprising at least one control member (18) for controlling the pressurizing of the actuator and at least one control member (19) for controlling the exhausting of the actuator, the device comprises a cam (13) associated, on the one hand, with at least one means of driving (14) as a function of a variation in height of the seat, and, on the other hand, with the valve control members, the said cam being configured to have at least one neutral position in which it actuates no control member, and at least two active positions about the said neutral position, these respectively corresponding to a pressurizing of the actuator when the cam has pivoted about the neutral position in a direction corresponding to a reduction in the height of the seat and to an exhausting of the actuator when the cam is pivoted about the neutral position in a direction corresponding to a raising of the height of the seat, **characterized in that** the means of driving also being mounted so that they can be disengaged in relation to the cam.

2. Device (1) according to Claim 1, **characterized in that** the cam (13) is equipped with a return means (20) for returning it to the neutral position.

3. Device (1) according to either one of Claims 1 and 2, **characterized in that** the means of driving (14) is disengaged in relation to the cam (13) using a pneumatic signal.

4. Device (1) according to any one of Claims 1 to 3, **characterized in that** the disengaging means (15) is mounted opposing the action of an elastic return member (16) tending to return to the engaged position.

5. Device (1) according to any one of Claims 1 to 4, **characterized in that** the control valve (10) also comprises at least one control member for controlling the pressurizing and at least one control member for controlling the exhausting of the actuator, each of these being able to be connected to a control lever (11) for controlling the height of the seat so that this can be controlled manually, actuation of the said control members causing the means of driving (14) to be disengaged in relation to the cam (13).

6. Device (1) according to any one of Claims 1 to 5, **characterized in that** the means of driving the cam (13) is a gearwheel (14).

7. Device (1) according to Claim 6, **characterized in that** the clutch means is a clutch spider (15) mounted inside the gearwheel (14) such that it can effect a translational movement between a position in which it engages the gearwheel and transmits its movement to the cam (13) and a position in which it no longer transmits the movement of the gearwheel to the cam.

8. Device (1) according to any one of Claims 1 to 7, **characterized in that** it comprises a means of exhausting (12) the actuator that does not lead to the disengagement of the means (14) of driving the cam (13).

9. Seat, particularly for a motor vehicle, **characterized in that** it comprises at least one device (1) for adjusting and maintaining the height according to any one of Claims 1 to 8.

10. Motor vehicle, **characterized in that** it comprises at least one seat according to Claim 9.

## Patentansprüche

1. Vorrichtung (1) zur Regulierung der Höhe eines Sitzes, vor allem eines Kraftfahrzeugsitzes, die mindestens ein Bedienelement umfasst, das dazu bestimmt ist, bewegbar in Bezug auf die feste Basis zwischen einer festen Basis und einer Basis des Sitzes angeordnet zu sein, wobei das Bedienelement mit mindestens einer Kraftquelle über mindestens ein Steuerventil (10) verbunden ist, das mindestens ein Steuerorgan (18) einer Unterdrucksetzung des Bedienelements und mindestens ein Steuerorgan (19) eines Druckabbaus des Bedienelements aufweist, wobei die Vorrichtung einen Nocken (13) umfasst, der einerseits in Abhängigkeit einer Höhenvariation des Sitzes mit mindestens einem Antriebsmittel (14) und andererseits mit Steuerorganen des Ventils verbunden ist, wobei der Nocken konfiguriert ist, um mindestens eine neutrale Stellung aufzuweisen, in der er kein Steuerorgan bedient, und mindestens zwei aktive Stellungen um die neutrale Stellung herum, die jeweils einer Unterdrucksetzung des Bedienelements entsprechen, wenn sich der Nocken um die neutrale Stellung in eine Richtung gedreht hat, die einer Verringerung der Höhe des Sitzes entspricht, und einem Druckabbau des Bedienelements, wenn sich der Nocken um die neutrale Stellung in eine Richtung gedreht hat, die einer Anhebung der Höhe des Sitzes entspricht, **dadurch gekennzeichnet, dass** die Antriebsmittel weiterhin ausrückbar im Verhältnis zum Nocken montiert sind.

2. Vorrichtung (1) nach Anspruch 1, **dadurch gekennzeichnet, dass** der Nocken (13) mit einem Rückholmittel (20) in neutrale Stellung ausgestattet ist.

3. Vorrichtung (1) nach einem der Ansprüche 1 oder 2, **dadurch gekennzeichnet, dass** das Ausrücken des Antriebsmittels (14) im Verhältnis zum Nocken (13) durch ein pneumatisches Signal erfolgt.

4. Vorrichtung (1) nach einem der Ansprüche 1 bis 3, **dadurch gekennzeichnet, dass** das Ausrückmittel (15) in eingerückter Stellung gegen ein elastisches Rückholorgan (16) montiert ist.

5. Vorrichtung (1) nach einem der Ansprüche 1 bis 4, **dadurch gekennzeichnet, dass** das Steuerventil (10) ebenfalls mindestens ein Steuerorgan der Unterdrucksetzung und mindestens ein Steuerorgan des Druckabbaus des Bedienelements umfasst, die jeweils imstande sind, mit einem Hebel (11) zum Steuern der Sitzhöhe im Hinblick auf seine manuelle Steuerung verbunden zu sein, wobei das Bedienen der Steuerorgane das Ausrücken des Antriebsmittels (14) im Verhältnis zum Nocken (13) hervorruft.

6. Vorrichtung (1) nach einem der Ansprüche 1 bis 5, **dadurch gekennzeichnet, dass** das Antriebsmittel des Nockens (13) ein Zahnrad (14) ist.

7. Vorrichtung (1) nach Anspruch 6, **dadurch gekennzeichnet, dass** das Einrückmittel ein im Zahnrad (14) zwischen einer Stellung, in der es in das Zahnrad eingreift und seine Bewegung auf den Nocken (13) überträgt, und einer Stellung, in der es die Bewegung des Zahnrads nicht mehr an den Nocken überträgt, verschiebend bewegbar montierter Kupplungsstern (15) ist.

8. Vorrichtung (1) nach einem der Ansprüche 1 bis 7, **dadurch gekennzeichnet, dass** sie ein Mittel zum Druckabbau (12) des Bedienelements umfasst, ohne das Ausrücken des Antriebsmittels (14) des Nocken (13) zu bewirken.

9. Sitz, vor allem für ein Kraftfahrzeug, **dadurch gekennzeichnet, dass** er mindestens eine Vorrichtung nach einem der Ansprüche 1 bis 8 umfasst.

10. Kraftfahrzeug, **dadurch gekennzeichnet, dass** es mindestens einen Sitz nach Anspruch 9 umfasst.
